Europäisches Patentamt

European Patent Office

Office européen des brevets

(19)

(11) Veröffentlichungsnummer: **0 096 315**
**A2**

(12) **EUROPÄISCHE PATENTANMELDUNG**

(21) Anmeldenummer: 83105280.8

(22) Anmeldetag: 27.05.83

(51) Int. Cl.³: **B 25 H 3/00**

(30) Priorität: 27.05.82 DE 8215475 U

(43) Veröffentlichungstag der Anmeldung:
21.12.83 Patentblatt 83/51

(84) Benannte Vertragsstaaten:
AT CH FR GB LI NL

(71) Anmelder: KARL BOCK GMBH & CO.
Postfach 60 Hornberger Strasse 85
D-7233 Lauterbach(DE)

(72) Erfinder: Bock, Karl
Sommerberg 45
D-7233 Lauterbach(DE)

(72) Erfinder: Bock, Bernhard
Hornberger Strasse 22
D-7233 Lauterbach(DE)

(72) Erfinder: Lange, Gerd
Rechbergerstrasse 22
D-7230 Schramberg 11(DE)

(74) Vertreter: Patentanwälte Dipl.-Ing. Klaus Behn
Dipl.-Phys. Robert Münzhuber
Widenmayerstrasse 6/1V
D-8000 München 22(DE)

(54) Vorrichtung zum Aufbewahren von Lager- und Sammelgut.

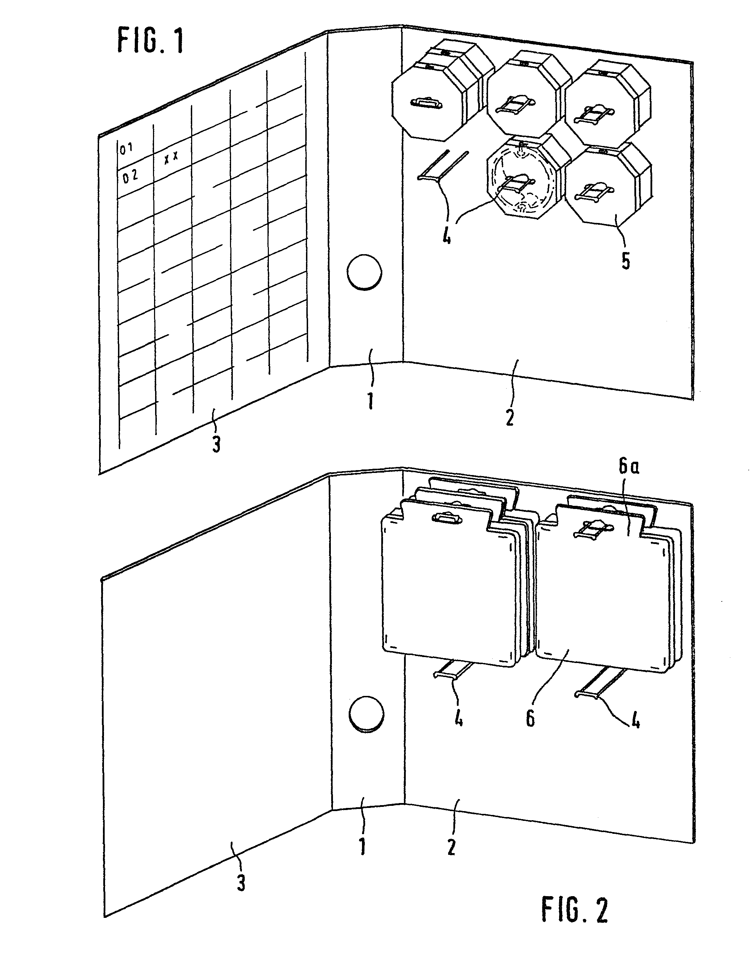

(57) Vorrichtung zum Aufbewahren von Lager- und Sammelgut, insbesondere für Loch- und Magnetbänder für CNC-gesteuerte Werkzeugmaschinen, EDV-Anlagen oder dergleichen. Die Vorrichtung besteht aus einem aufklappbaren Ordner (1) in Form eines Briefordners, bei dem an wenigstens einer Deckelinnenseite (2) Aufhängebügel (4) bzw. Aufhängeschienen befestigt sind, welche die Bänder enthaltende Behälter aufnehmen können. Dabei sind die Aufhängebügel bzw. Aufhängeschienen vorzugsweise so ausgebildet, daß ein Herabfallen der Behälter in jeder Lage des Ordners verhindert ist. (Figure 1)

FIG. 1

EP 0 096 315 A2

VORRICHTUNG ZUM AUFBEWAHREN VON LAGER- UND SAMMELGUT

Die Erfindung betrifft eine Vorrichtung zum Aufbewahren von Lager- und Sammelgut, insbesondere für Loch- und Magnetbänder für CNC-gesteuerte Werkzeugmaschinen, EDV-Anlagen oder dergleichen.

Für CNC-gesteuerte Werkzeugmaschinen sowie für den Betrieb von EDV-Anlagen sowie Daten- und Text-Systemen werden in steigendem Umfange Loch- bzw. Magnetbänder benötigt. Das Aufbewahren solcher Bänder macht überall Schwierigkeiten, da diese Bänder einerseits gegen äußere Einflüsse geschützt sein sollen, andererseits aber leicht auffindbar untergebracht werden sollen.

Der Erfindung liegt die Aufgabe zugrunde, eine Vorrichtung der eingangs genannten Art zu schaffen, die bei einfacher Herstellung eine sichere und geschützte sowie leicht zugängliche Aufbewahrung von Lager- und Sammelgut, insbesondere von Loch- und Magnetbändern, gestattet. Dies wird erfindungsgemäß erreicht, durch einen aufklappbaren Ordner in Form eines Briefordners mit an wenigstens einer Deckelseite angeordneten Aufhängebügeln bzw. Aufhängeschienen zur Aufnahme der die Bänder enthaltenden Behälter. Beispielsweise sind die die Aufhängebügel zur Aufnahme von mit Durchbrechungen bzw. mit hinterschnittenen und/oder durchbrochenen Anformungen versehenen Behältern vorgesehen. Vorzugsweise sind die Aufhängebügel bzw. Aufhängeschienen mit einer ein selbsttätiges Aushängen der Behälter verhindernden, freigebbaren Sperrvorrichtung versehen. Diese Aufhängebügel bzw. Aufhängeschienen können in wenigstens einer Richtung elastisch verformbar ausgebildet sein und zumindest am freien Ende in dieser Richtung in nicht verformten Zustand eine größere Abmessung haben als die Durchbrechung in den Behältern bzw. den Anformungen. Dabei können die Aufhängebügel bzw. Aufhängeschienen am freien Ende mit seitlichen Anschlägen versehen sein.

Die Aufhängebügel bzw. Aufhängeschienen können aber auch im wesentlichen starr ausgebildet sind, wobei zusätzlich ein in die Durchbrechung der Behälter oder der Anformungen eingreifendes elastisches Sperrelement vorgesehen sein kann, das als ein unterhalb jedes Aufhängebügels oder jede Aufhängeschiene angeordneter elastischer Sperrstift oder Sperrhaken ausgebildet sein kann. Hierdurch wird eine sichere Halterung der Behälter in jeder Lage des Ordners erreicht.

Vorzugsweise sind die Behälter achteckig ausgebildet. Sie sind vorzugsweise mit einer Zentrierung zur Aufnahme eines mit einer zentrischen Durchbrechung versehenen Spulenkerns versehen, der zur Aufnahme eines der genannten Bänder dient. Die Behälter können mit einem aufsteckbaren Etikett versehen sein. Die Aufhängebügel können aber auch als elastische Klammern ausgebildet sein, die die Behälter vorzugsweise umgreifen, wobei zweckmäßig die freien Klammerenden schräg auseinanderlaufen, so daß ein Eindrücken der Behälter in die Klammern ermöglicht wird.

Die erfindungsgemäße Vorrichtung ist in besonders einfacher Weise herstellbar. Sie ermöglicht die übersichtliche Unterbringung zahlreicher Behälter zur Aufbewahrung von Lager- und Sammelgut, insbesondere von Loch- und Magnetbändern, wobei die Behälter übersichtlich angeordnet und leicht auffindbar sind. Ferner wird eine sichere Halterung der Behälter in jeder Lage der Ordner, und zwar auch bei einem auf dem Kopf stehenden Ordner, gewährleistet.

Die Erfindung ist im folgenden anhand der Zeichnung an Ausführungsbeispielen näher erläutert. In der Zeichnung zeigen:

Fig. 1    eine perspektivische Ansicht einer erfindungsgemäßen Vorrichtung in Form eines Briefordners mit eingehängten achteckigen Behältern,

Fig. 2    eine perspektivische Ansicht einer Vorrichtung nach Fig. 1, jedoch mit eingehängten viereckigen Behältern,

Fig. 3    einen Schnitt durch einen achteckigen Behälter mit aufgeklapptem Deckelteil,

Fig. 4    eine Ansicht des aufgeklappten Behälters nach Fig. 3 von oben,

Fig. 5    eine Ansicht des Behälters nach Fig. 3 und 4 in geschlossenem Zustand von vorn,

Fig. 6a - 6c       einen Aufhängebügel mit Sperrvorrichtung in
                   Draufsicht, Seitenansicht und Stirnansicht
                   und

Fig. 7a, 7b        eine abgewandelte Ausführungsform des Aufhängebügels nach Fig. 6 in einer Draufsicht
                   und einer Stirnansicht.

Fig. 8       schematisch eine Seitenansicht einer weiteren Ausführungsform.

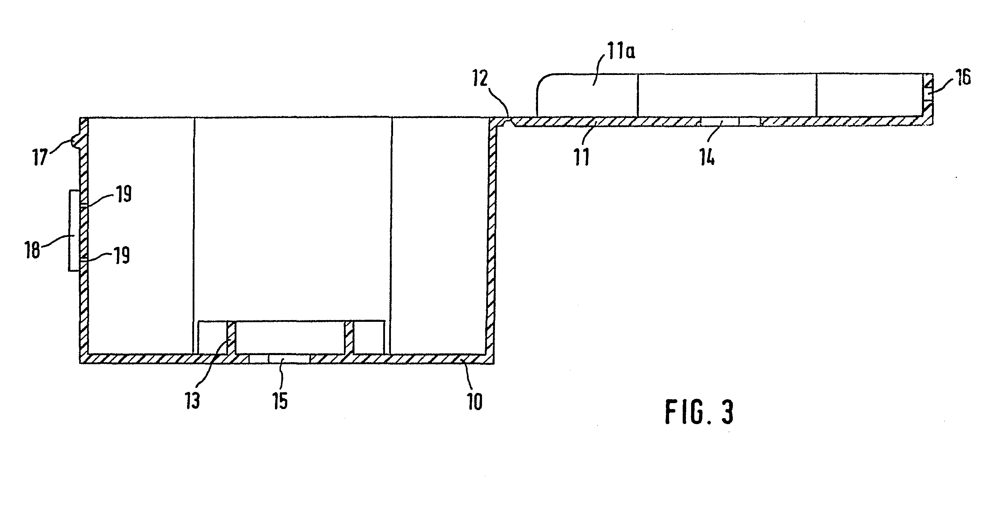

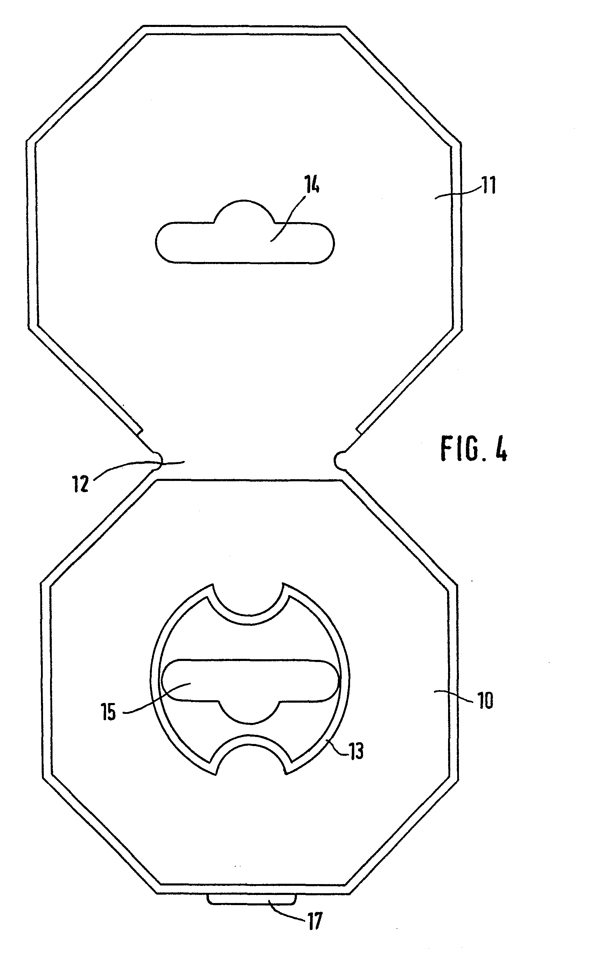

Fig. 1 zeigt eine erfindungsgemäße Vorrichtung für achteckige Behälter. Mit 1 ist ein aufklappbarer Ordner in Form
eines in Büros verwendeten Briefordners bezeichnet, der eine
Rückwand 2 und einen aufklappbaren Deckel 3 besitzt. An der
Rückwand 2 sind Aufhängebügel 4 befestigt, an denen die
einzelnen Behälter 5 aufgehängt werden können. Die Behälter
5 sind achteckig ausgebildet. Ihr Aufbau ist in den Fig. 3 - 5
näher dargestellt. Mit dem dargestellten Ordner läßt sich
eine große Anzahl von Behältern 5 übersichtlich auf kleinstem
Raum unterbringen.

Fig. 2 zeigt ebenfalls einen mit Aufhängebügeln 4 versehenen
Ordner 1, der hier für die Aufnahme von viereckigen Behältern
6 mit angespritzten Anformungen 6a vorgesehen ist.

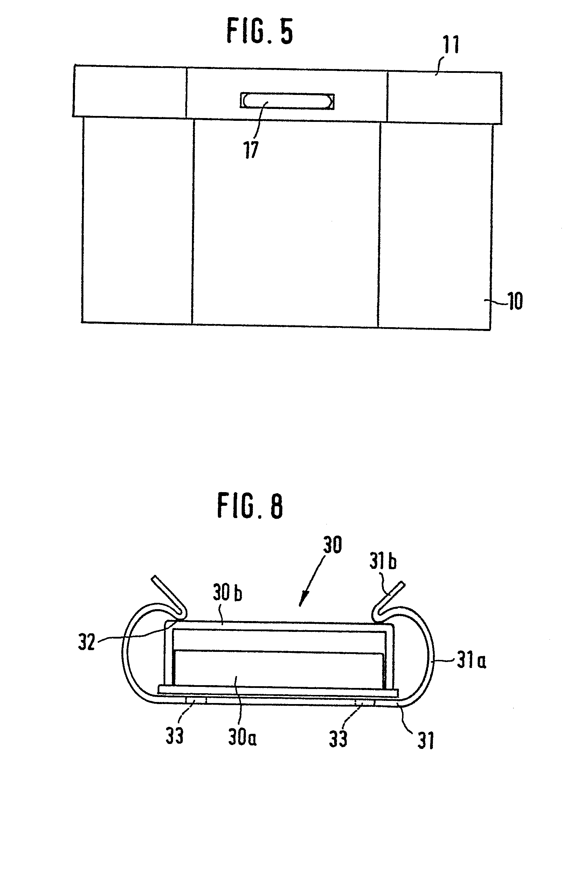

Fig. 3 zeigt eine Seitenansicht eines achteckigen Behälters,
wie er in Fig. 1 mit 5 bezeichnet ist, in einem Schnitt. Dieser Behälter mit einem Außenmaß von beispielsweise 50 mm x
50 mm ist für kürzere Bänder bis etwa 6 m Länge bestimmt, die
vorzugsweise für CNC-gesteuerte Funkenerosionsmaschinen,
Drahtschneidemaschinen, Spritzgußmaschinen, Drehbänke usw.
in großer Zahl benötigt werden. Der Behälter besteht aus
einem Bodenteil 10 und einem Deckelteil 11 mit einem die beiden Teile verbindenden Filmscharnier 12 und mit Rastverschlüssen 16, 17 die in geschlossenem Zustand des Behälters
ineinandergreifen, wie es in Fig. 5 gezeigt ist.

Der achteckige Behälter enthält in seinem Bodenteil 10 eine
Zentrierung 13 zur Aufnahme eines ein Magnetband oder dergleichen tragenden Spulenkerns. Dieser Spulenkern sowie die
Zentrierung 13 sind innen hohl. Bodenteil 10 und Deckelteil 11
sind je mit einem Schlitz 15 bzw. 14 für die Durchführung eines Aufhängebügels 4 (Fig. 1) versehen. Auf diese Weise sind die Behälter durch die Schlitze 14, 15 und Zentrierung 13 sowie den nicht dargestellten Spulenkern hindurch auf einen Bügel 4 aufhängbar.

In Fig. 3 ist noch ein Etikett 18 dargestellt, das mit Hilfe von Zapfen 19 in entsprechende Löcher des Bodenteils 10 einsteckbar ist. Es ist aber auch möglich, ein selbstklebendes Etikett einfach von innen an einen Teil des Behälters anzukleben, das dann durch die Behälterwand hindurch sichtbar ist.

Der erwähnte, ein Magnetband oder ein Lochband tragende Spulenkern kann aus preisgünstigem Kunststoff bestehen. Er besitzt ein oder zwei Schlitze zum Einstecken des Bandanfangs. Der das Band tragende Spulenkern wird einfach in den Behälter eingelegt, ohne daß das freie Bandende besonders befestigt werden muß. Das Bandende legt sich einfach an die Behälterwand an. Zur leichteren Entnahme des Spulenkerns aus dem Behälter ist der Spulenkern mit einem umlaufenden Innenwulst versehen, an dem er mit dem Finger leicht erfaßt und aus dem Behälter herausgenommen werden kann.

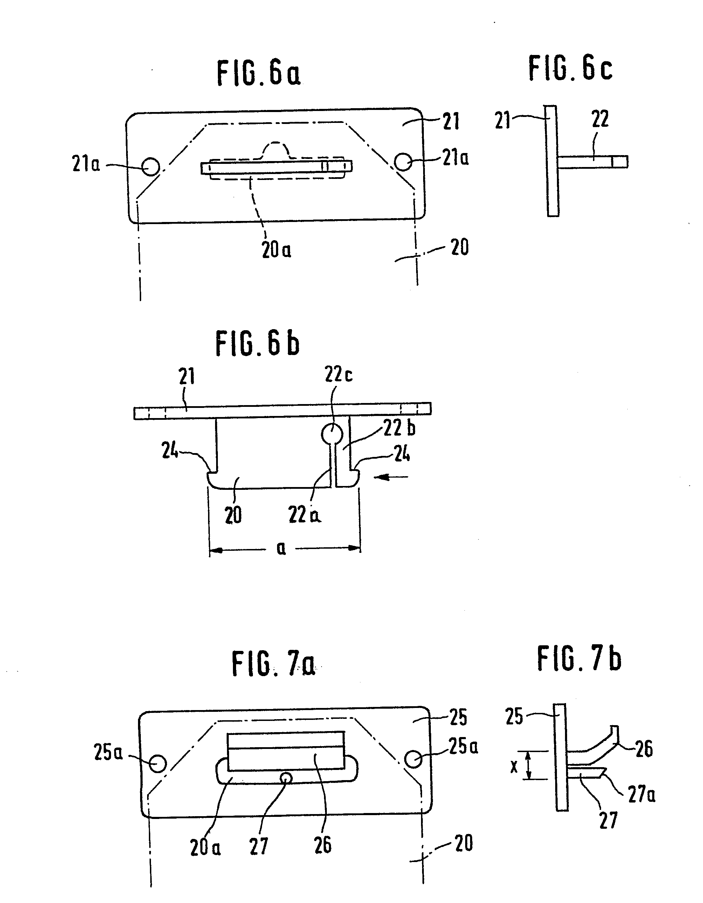

Ein Aufhängebügel mit einer Sperrvorrichtung ist in den Fig. 6a bis 6c dargestellt. Mit 20 ist die Anformung eines Behälters bezeichnet, in welcher eine Durchbrechung 20a zum Aufhängen an einer Aufhängevorrichtung bezeichnet. Die Aufhängevorrichtung besteht aus einer Grundplatte 21, die zur Befestigung an der Innenseite eines Deckels eines Ordners mit Hilfe von Löchern 21a versehen ist. In der Grundplatte ist ein Aufhängebügel oder eine Aufhängeschiene 22 vorgesehen, die durch die Durchbrechung 20a hindurchgesteckt werden kann. Die Befestigungsschiene 22 ist mit einem Schlitz 22a versehen, der in einer Bohrung 22c endet. Die so gebildete Zunge 22b ist elastisch biegbar.

Die Breite a der Schiene 22 ist größer als die Länge der Durchbrechung 20a in der Anformung 20. Durch die Eckenabrundungen der Schiene 22 kann aber die Anformung 20 mit der Durchbrechung 22a auf die Schiene 22 aufgesteckt werden, wobei die Zunge 22b nach einwärts gebogen wird und anschließend wieder in die in Fig. 6b gezeigte Lage zurückschnappt, in welcher die Anformung durch die Anschläge 24 auf der Schiene 22 festgehalten wird. Zum Abnehmen muß die Zunge 22b wieder nach einwärts gedrückt werden, worauf die Anformung 20 ausgehakt werden kann.

Die aufgehängten Dosen werden von der Schiene im aufgehängten Zustand so festgehalten, daß sie sich in keiner Stellung des Ordners, auch nicht in Überkopfstellung, selbst aushängen können. Durch die besondere Ausbildung der Schiene wird unter anderem verhindert, daß das elastische Sperrelement durch das Eigengewicht des Behälters ausgelöst und damit der Behälter freigegeben wird.

Für Behälter mit verhältnismäßig geringem Gewicht reicht es aus, wenn ein Aufhängebügel (26) mit einer federnden Raste gemäß den Fig. 7a, 7b versehen wird.

In den Fig. 7a, 7b ist mit 25 eine Grundplatte mit Befestigungslöchern 25a bezeichnet. Der Aufhängebügel 26 ist hakenförmig ausgebildet. 27 ist die federnde Raste, die hier als elastisch ausbiegbarer Stift 27 gezeigt ist, der in die Durchbrechung 20a eingreift und am unteren Rand dieser Durchbrechung anliegt. Der Abstand x ist etwa gleich der Breite der Durchbrechung, so daß ein Anheben des Behälters im aufgehängten Zustand nur gegen die Federkraft des Stiftes 27 möglich ist. Um das Aufhaken zu erleichtern, ist die Stirnfläche 27a des Stiftes 27 abgeschrägt.

Durch die erfindungsgemäße Ausbildung lassen sich die Behälter in sehr einfacher Weise herstellen. Durch die einstückige Ausbildung sind sie leicht zu handhaben. Durch die sie durchsetzenden Schlitze wird kein zusätzlicher Raum für die Aufhängung benötigt, so daß besonders viele Behälter in einem Ordner untergebracht werden können. Durch die achteckige Ausbildung lassen sich die dicht nebeneinander aufgehängten Behälter leicht entnehmen.

Die besondere Ausbildung der Aufhängebügel bzw. Aufhängeschienen sichert einen festen Halt der Behälter, so daß diese
auch bei liegendem oder auf dem Kopf stehenden Behälter
nicht ausgehakt werden.

Fig. 8 zeigt eine bevorzugte Ausführungsform, bei welcher die
Aufhängebügel als elastische Klammern 31 ausgebildet sind.
Diese Klammer 31 ist mit Hilfe von Befestigungslöchern 33 an
einer Deckelseite eines Ordners befestigt, beispielsweise angenietet. Die Klammer 31 weist seitliche elastische Ausbiegungen 31a auf. Die freien Klammerenden 31b verlaufen wieder
schräg nach auswärts, so daß ein beispielsweise aus Unterteil
30a und Deckel 30b bestehender Behälter 30 in die Klammer von
oben eingedrückt werden kann, wodurch über die schrägen
Klammerenden 31b die Klammern aufgebogen werden.

PATENTANSPRÜCHE

1. Vorrichtung zum Aufbewahren von Lager- und Sammelgut, insbesondere für Loch- und Magnetbänder für CNC-gesteuerte Werkzeugmaschinen, EDV-Anlagen oder dergleichen, gekennzeichnet durch einen aufklappbaren Ordner (1) in Form eines Briefordners mit an wenigstens einer Deckelseite (2) angeordneten Aufhängebügeln (4; 22; 26) bzw. Aufhängeschienen zur Aufnahme der die Bänder enthaltenden Behälter (5, 6, 30).

2. Vorrichtung nach Anspruch 1, dadurch gekennzeichnet, daß die Aufhängebügel (22; 26) bzw. Aufhängeschienen mit einer ein selbsttätiges Aushängen der Behälter verhindernden, freigebbaren Sperrvorrichtung (22a, 22b; 27) versehen sind.

3. Vorrichtung nach Anspruch 1, gekennzeichnet durch Aufhängebügel (4; 22; 26) bzw. Aufhängeschienen zur Aufnahme von mit Durchbrechungen (14, 15) bzw. mit hinterschnittenen und/oder durchbrochenen Anformungen (6a; 20) versehenen Behältern (5; 6; 20).

4. Vorrichtung nach Anspruch 3, dadurch gekennzeichnet, daß die Aufhängebügel (22) bzw. Aufhängeschienen in wenigstens einer Richtung elastisch verformbar ausgebildet sind und zumindest am freien Ende in dieser Richtung in nicht verformtem Zustand eine größere Abmessung (a) haben als die Durchbrechung (20a) in den Behältern bzw. den Anformungen.

5. Vorrichtung nach Anspruch 4, dadurch gekennzeichnet, daß die Aufhängebügel (22) bzw. Aufhängeschienen am freien Ende mit seitlichen Anschlägen (24) versehen sind.

6. Vorrichtung nach Anspruch 2, dadurch gekennzeichnet, daß die Aufhängebügel (26) bzw. Aufhängeschienen im wesentlichen starr ausgebildet sind und daß zusätzlich ein in die Durchbrechung (20a) der Behälter oder der Anformungen (20) eingreifendes elastisches Sperrelement (27) vorgesehen ist.

7.   Vorrichtung nach Anspruch 6, dadurch gekennzeichnet, daß als elastisches Sperrelement ein unterhalb jedes Aufhängebügels (26) oder jeder Aufhängeschiene angeordneter elastischer Sperrstift (27) oder ein Sperrhaken vorgesehen ist.

8.   Vorrichtung nach einem der vorhergehenden Ansprüche, dadurch gekennzeichnet, daß die Aufhängebügel (26) bzw. Aufhängeschienen hakenförmig ausgebildet sind.

9.   Vorrichtung nach Anspruch 1, dadurch gekennzeichnet, daß die Behälter achteckig ausgebildet sind.

10.   Vorrichtung nach Anspruch 1 oder 9, dadurch gekennzeichnet, daß die Behälter mit einer Zentrierung (13) zur Aufnahme eines mit einer zentrischen Durchbrechung versehenen Spulenkerns versehen sind.

11.   Vorrichtung nach Anspruch 1, 9 oder 10, dadurch gekennzeichnet, daß die Behälter mit einem aufsteckbaren Etikett (18) versehen sind.

12.   Vorrichtung nach Anspruch 1, dadurch gekennzeichnet, daß die Aufhängebügel als elastische Klammern (31) ausgebildet sind.

13.   Vorrichtung nach Anspruch 12, dadurch gekennzeichnet, daß die als elastische Klammern ausgebildeten Aufhängebügel die Behälter umgreifen.

14.   Vorrichtung nach Anspruch 12 oder 13, dadurch gekennzeichnet, daß die freien Klammerenden mit schräg auseinanderlaufenden freien Enden (31b) versehen sind.

FIG. 1

01
02    X X

3    1    2    4    5

6a

3    1    2    4    6    4

FIG. 2

FIG. 3

FIG. 4

83105280.8 Karl Bock GmbH

# FIG. 5

11

17

10

# FIG. 8

30

30 b

31 b

32

31 a

33 30a 33 31

83105280.8 Karl Bock GmbH

## FIG.6a

21
21a
21a
20a
20

## FIG.6c

21
22

## FIG.6b

21
22c
24
22b
24
20
22a
a

## FIG.7a

25
25a
25a
20a
27
26
20

## FIG.7b

25
26
x
27a
27